# EUROPEAN PATENT SPECIFICATION

(11) **EP 2 959 638 B1**
(45) Date of publication and mention of the grant of the patent: **05.09.2018**
(21) Application number: 14706675.7
(22) Date of filing: 19.02.2014
(51) Int. Cl.: H04L 12/26, H04L 29/12

(54) **A METHOD OF, AND APPARATUS FOR, ANALYSING NETWORK COMMUNICATIONS DATA**
VERFAHREN UND VORRICHTUNG ZUR ANALYSE VON NETZWERKKOMMUNIKATIONSDATEN
PROCÉDÉ ET APPAREIL D'ANALYSE DE DONNÉES DE COMMUNICATION DE RÉSEAU

(30) Priority: 20.02.2013 GB 201302985
(43) Date of publication of application: 30.12.2015
(73) Proprietor: Nominet UK, Oxford, Oxfordshire OX4 4DQ (GB)
(72) Inventor: BELLIS, Raymond Peter, Oxford Oxfordshire OX4 4DQ (GB); ARENDS, Roy Bernard Herman, Oxford Oxfordshire OX4 4DQ (GB)
(74) Representative: J A Kemp
(86) International application number: PCT/GB2014/050488
(87) International publication number: WO 2014/128464

(56) References cited:
- EP-A2- 1 367 799
- US-B1- 6 279 113
- BERTRAND G ET AL: "CDNI Logging Interface; draft-ietf-cdni-logging-00.txt", CDNI LOGGING INTERFACE; DRAFT-IETF-CDNI-LOGGING-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 10 December 2012 (2012-12-10), pages 1-43, XP015089044, [retrieved on 2012-12-10]

## Description

The invention relates to a method of analysing network communications data and an apparatus for analysing network communications data. In a preferred embodiment of the invention, the method or apparatus analyses network protocol traffic (in the form of network packets) observed passing between computers connected via a communications network.

Network packets are typically composed of many attributes, packed into data fields in a protocol-specific manner within a packet of data sent over a communications network.

In one example, the network packets comprise requests and corresponding responses adhering to the Domain Name System (DNS) protocol as specified in RFC 1034, RFC 1035, and subsequent documents that amended the core specification (e.g. RFC 2671). The DNS is a fundamental component of the Internet, designed as a database system that translates a computer's domain name into an IP address. DNS allows connection to another networked computer or remote service by interpreting the user-friendly domain name rather than its numerical IP address. For example, a "DNS Request", containing a domain name will be processed by a DNS Server and will return a "DNS Response" containing the IP address. At first sight, DNS seems a simple process, but due to mechanisms that deal with DNS server hierarchy, redundancy, error messages and caching, the system is rather more complicated. DNS Requests typically vary in length from 20 to 60 bytes, and DNS Responses may typically vary in length from 50 bytes through to 4096 bytes.

To successfully manage a practical DNS system it is desirable for the DNS operator to have access to systems that monitor DNS performance. DNS performance depends on the efficient running of the DNS Server as well as the frequency and type of DNS Requests coming from the Internet. With over 4 Billion IP addresses on the Internet, it is theoretically possible for any of these IP address sources to impair the performance of the DNS server by sending erroneous DNS Requests to the server. Whilst it is often the case that such erroneous DNS Requests are the result of some accidental poorly performing Internet-connected computer, the nature of the Internet is such that there is an increasing number of "contrived" DNS Request events which are deliberately designed to attack the performance of the DNS server. To be able to monitor, isolate and mitigate against such deliberate attacks requires sophisticated monitoring of the DNS Requests and the associated DNS Responses.

The monitoring and analysis of network communications traffic, such as DNS requests and responses, serves many purposes, including (but not limited to):
- Capacity planning
- Detection of non-compliant requests and/or responses
- Analysis of usage patterns

However, there are problems in providing tools for monitoring and analysing such communications, including: the sheer volume of data when there are literally billions of requests processed every day; the variable nature of the responses; and enabling the data to be efficiently interrogated.

US 6 279 113 B1 discloses a signature based dynamic network intrusion detection system, including attack signature profiles which are descriptive of characteristics of known network security violations. The attack signature profiles are organised into sets of attack signature profiles according to security requirements of network objects on a net. Each network object is assigned a set of attack signature profiles which is stored in a signature profile memory together with association data indicative of which sets of attack signature profiles correspond to which network objects. A monitoring device monitors network traffic for data addressed to the network objects. Upon detecting a data packet addressed to one of the network objects, packet information is extracted from the data packet. The extracted information is utilised to obtain a set of attack signature profiles corresponding to the network object based on the association data. A virtual processor executes instructions associated with attack signature profiles to determine if the packet is associated with a known network security violation. An attack signature profile generator is utilised to generate additional attack signature profiles configured for processing by the virtual processor in the absence of any corresponding modification of the virtual processor.

EP 1 367 799 A2 discloses methods of preventing flooding-type denial-of-service attacks in a computer-based network. Connection establishing messages known as SYN packets are matched with connection terminating messages (FIN packets) using a hash algorithm. The hash algorithm or message digest uses source and destination IP addresses port numbers, and a secret key as input parameters. The SYN packets and FIN packets are mapped to buckets using the hash algorithm and statistics are maintained for each bucket. A correspondence between SYN packets and FIN packets is maintained to close a security hole.

BERTRAND G ET AL: "CDNI Logging Interface; draft-ietf-cdni-logging-OO.txt", CDNI LOGGING INTERFACE; DRAFT-IETF-CDNI-LOGGING-OO.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 10 December 2012 (2012-12-10), pages 1-43, XP015089044, pages 5-7 discloses a logging interface between a downstream CDN and an upstream CDN that are interconnected as per the CDNI framework. A reference model for CDNI logging is described. The protocol for CDNI logging information exchanges covering the information elements as well as the transport of those is specified.

The present invention seeks to alleviate, at least partially some or any of the above problems.

The scope of the invention is defined in the appended claims.

Embodiments of the invention will now be described, by way of example only, with reference to the accompanying drawings in which:
Figure 1 is a schematic illustration of an apparatus for matching request-response pairs and storing the resulting information;
Figure 2 is a schematic illustration of an apparatus for classifying and counting packets;
Figure 3 shows the format of a table of records generated by the apparatus of Fig. 2; and
Figure 4 is an alternative embodiment of the apparatus of Fig. 2.

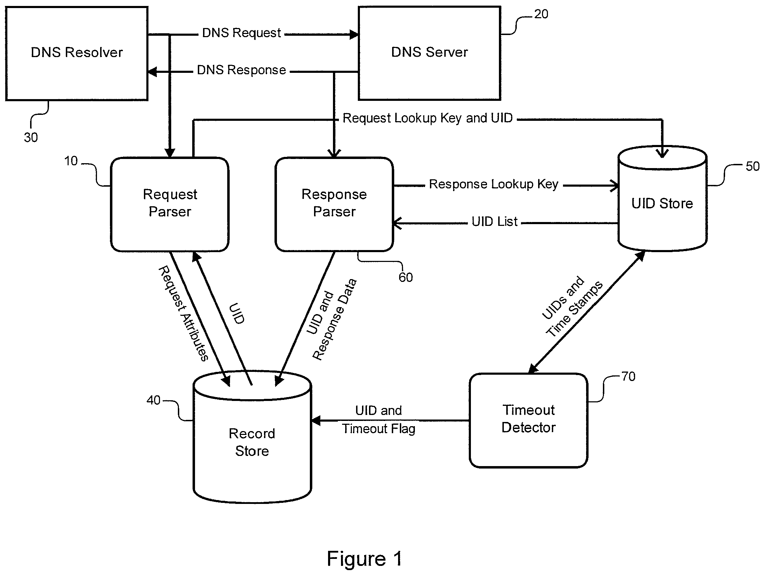

Referring to Fig. 1, Request Parser 10 receives copies of traffic being sent to a DNS Server 20 across a communications network, such as the internet, in this example from DNS Resolver 30. The Request Parser 10 incorporates a packet capture device (input) configured to receive all packets whose User Datagram Protocol (UDP) or Transmission Control Protocol (TCP) headers indicate that the packet is a DNS packet. Such packets will have a "source port" and/or "destination port" data field containing a value of 53 as defined by RFC 1035.

Copies of certain attributes of the request, along with a timestamp (e.g. the time of capture), are stored as a single record in Record Store 40. Record Store 40 allocates a Unique Identifier (UID) to this record which is communicated to the Request Parser 10. Whilst it would be possible to store every attribute, in practice some attributes are of no operational importance and reducing the set of attributes to the minimum required can substantially reduce the storage requirements.

The Request Parser 10 creates a Lookup Key containing the following attributes that are used to identify the corresponding response:
- IP protocol version (i.e. IPv4 or IPv6)
- Layer 4 protocol (i.e. UDP or TCP)
- Remote IP address
- Remote port number
- Local IP address
- Local port number
- DNS request ID

The packet's UID and timestamp are stored in UID Store 50 using the Lookup Key to index them. If more than one outstanding request matches the same Lookup Key then the result will be that a list of UIDs and capture times will be stored against that Lookup Key. This ensures that, in the event of two or more identical requests being captured without an intervening corresponding response being captured, each subsequent response can be correctly assigned to a request, chronologically, as described below.

A Response Parser 60 receives copies of traffic being sent from a DNS Server 20 across a communications network. The Response Parser 60 incorporates a packet capture device configured to receive all DNS packets in the same way as the Request Parser 10.

The Response Parser 60 parses the response into its individual attributes, according to the relevant network communications protocol specifications, in the same way as the Request Parser 10.

Instead of the Request Parser 10 and Response Parser 60 having separate packet capture devices (inputs) they may instead share a single packet capture device and determine whether a packet should be handled by the Request Parser 10 or Response Parser 60 by examining the value of the QR ("Query Response") bit in the DNS protocol header of each packet.

The Response Parser 10 creates a Lookup Key using the same attributes as the Request Parser 60, such that for corresponding requests and responses the same Lookup Key value is obtained.

The Response Parser 60 queries UID Store 50 using this Lookup Key to obtain the UID and time of capture of the request matching that Lookup Key. In the event of the UID Store 50 containing a list of multiple unmatched requests matching that Lookup Key, then the first (oldest time of capture) outstanding UID and time of capture are obtained. The record for a request (UID and time of capture) is deleted from the UID Store 50 after it has been matched with a response. Using the UID as the key, copies of certain attributes of the response are added to the request record in Record Store 40, along with information recording the elapsed time between the capture of the request and the subsequent capture of the corresponding response, to create a Request-Response record. As for the Request Parser 10, the choice of which attributes to store is a trade-off between operational requirements and data storage requirements.

Instead of adding the response attributes to the request record, an alternate implementation stores the response attributes as a separate record in a second table, where each entry in the request record table and corresponding entry in the response record table share a common key (i.e. the UID). For the purposes of this invention, a pair of records so linked shall be considered a single request-response record.

Periodically a Timeout Detector 70 scans every record in UID Store 50. If the difference between the current system time and the recorded timestamp is more than a pre-defined time limit, the system adds a flag to the request record in Record Store 40 to the effect that no response has been received (such records can then, if required, be considered as Request-Response records in subsequent processing, even though they contain no response information), and deletes the record in UID Store 50. For the DNS protocol an appropriate value for the time limit is 5 seconds, with a scan period of 1 second.

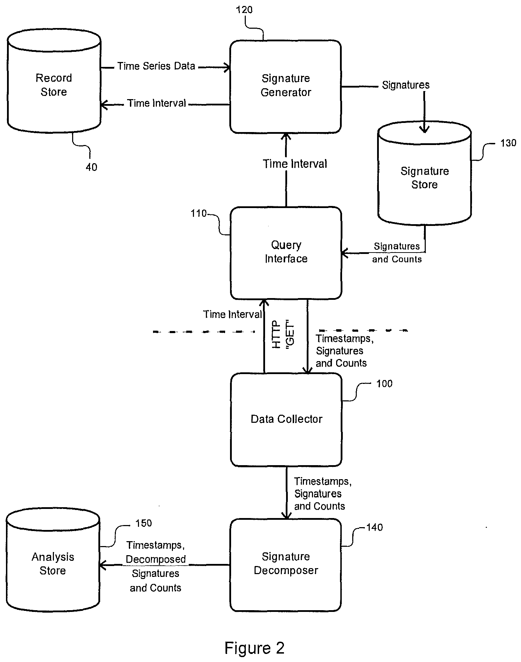

Analysis of the network communications data will now be described with reference to Fig. 2. A Data Collector 100 is instructed to create time series data for a specified time period and with a specified sub-interval (e.g. the previous hour, with 1 minute resolution). The instruction might be the result of a specific enquiry initiated by an end user, or it may be an automatically scheduled operation. This may be described as "on-demand" or "polling" operation.

The Data Collector issues a query (for example, using the HTTP protocol) to a Query Interface 110 containing those time parameters, which in turn passes the time parameters to a Signature Generator 120.

For the specified time period, the Signature Generator 120 retrieves all matching records from Record Store 40, in chronological order.

For each record, the values of particular predetermined attributes (e.g. Query Type, Response Code, IP Protocol Version etc.) are extracted and combined (without loss of information) into a 64-bit integer (hereafter "Signature") thereby collapsing those values into a 1-dimensional representation of those values. This is achieved by recording the values in a fixed order within the signature, with each attribute occupying a specified set of bits. The predetermination of which attributes to use to form the signatures depends on the intrinsic variability of the attributes. Attributes with high intrinsic variability (such that they might be expected to be different on every packet, e.g. Remote Address, Remote Port or DNS Query ID) are less suited than attributes that typically only contain a small range of values, per the examples given above. The same set of attributes is consistently used for every record to form all signatures
The Signature is stored in Signature Store 130, which counts how many times each distinct Signature is observed for each of the smallest sub-intervals of time specified. The use of a 64-bit integer as the "key" in this store is advantageous because it allows for optimal implementation of Signature Store 130 because comparison of integer values is a primitive operation within a CPU. Of course, other bit lengths are contemplated, while still representing every signature as a numerical value for ease of comparison.

Although the signature generation algorithm allows for up to 2⁶⁴ different signatures, in practice the number of distinct signatures observed in short time intervals (e.g. minutes) is only in the region of a few hundred because many of the protocol attributes have a limited range of common values.

At the end of processing data for each sub-interval of the specified time period, the Query Interface 110 retrieves all generated Signatures and counts thereof from Signature Store 130 and returns those values to the Data Collector 100 as the response to the aforementioned query. Signature Store 130 is emptied in readiness for the next sub-interval.

On receipt of the signature count data for a sub-interval; the Data Collector 100 passes this data to the Signature Decomposer 140, which then decomposes the Signature back into its original component attributes, i.e. the signature values are decomposed back into a multi-dimensional representation of the attribute values seen during each measured time interval.

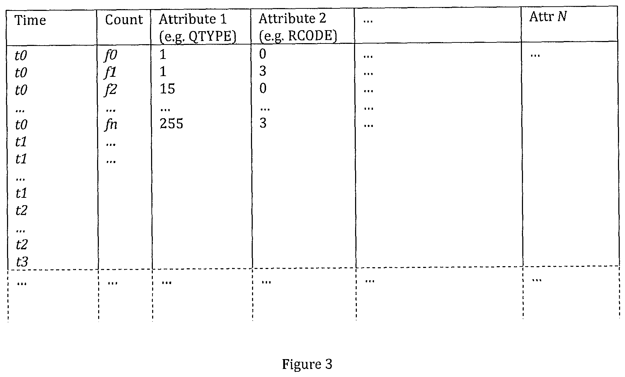

A record is created in Analysis Store 150 for each specified sub-interval and for each distinct Signature. Fig. 3 shows a table of such records; each row is one record representing occurrences of a specific signature for a specific time sub-interval. Each record contains the time value representing the start of the sub-interval (*t0, t1, t2*...), the original attribute values (the numerical value of each attribute), and the count of the number of times that particular combination of values (signature) was observed (*f0,f1, f2*...). This representation may be efficiently sliced (such that attributes not currently of interest are ignored) or filtered, such that the frequency distribution only includes those DNS queries whose attributes match (or do not match) specified values.

Once records for each sub-interval for the specified time period have been added to Analysis Store 150, the user can conduct multi-dimensional analysis of this information, for example using known analysis tools such as pivot tables.

The invention can enable the efficient creation of time series data sets (i.e. number of occurrences per specified time interval, or "frequency distribution") of attributes of a network protocol request (or request / response pair) where each time series may be filtered by the contents of any other attribute or combination thereof.

For example, the invention can be used to generate time series of:
- The frequency of DNS requests for an "MX record" (which specifies the location of the mail server for a domain name) that resulted in an "NXDomain" response code (which indicates that the domain name to which the request related does not exist).
- The relative frequency distribution of all observed values of the "Query Type" attribute for all DNS queries sent with the "DNSSEC OK" flag that were transmitted using the UDP/IP protocol and that resulted in a truncated response.

The generated time series information can be displayed graphically.

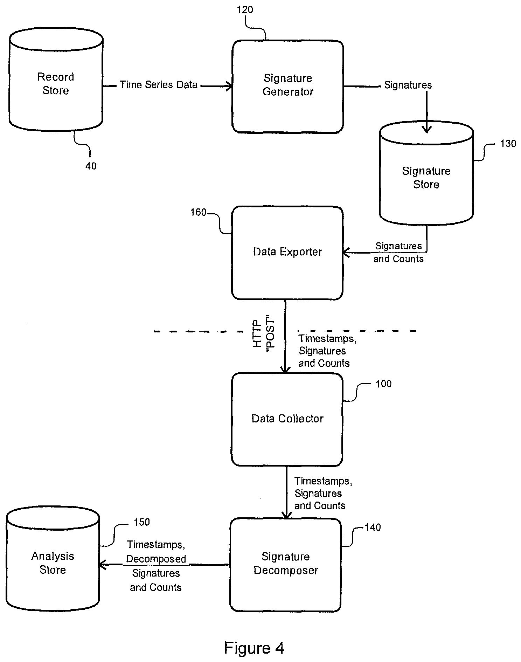

An alternative embodiment is illustrated in Fig. 4, which is a modified version of Fig. 2 in which like parts are given like reference numerals; repeated description thereof will be omitted. In this alternative embodiment, the Signature Generator 120 runs autonomously and the Query Interface is replaced with a Data Exporter 160. The Record Store 40 forwards records to the Signature Generator 120 in real time and generates Signatures as described above and passes those Signatures to Signature Store 130 for counting. This may be described as "real-time" or "push" operation.

At a pre-determined interval (typically one minute) the Data Exporter 160 retrieves all generated Signatures and counts thereof from Signature Store 130 and then initiates an export of those values to the Data Collector 100. Signature Store 130 is emptied in readiness for the next sub-interval.
On receipt of data from the Data Exporter 160, the Data Collector 100 then proceeds with signature decomposition by the Signature Decomposer 140 and storage in Analysis Store 150 as described above.
Although the embodiments of Figs. 2 and 4 are shown as using records from Record Store 40, this is not essential. For example, data can be delivered to the Signature Generator 120 directly from a communications network or indirectly via other apparatus not necessarily as illustrated in Fig. 1. Furthermore, the records received by the Signature Generator 120 are not limited to being derived from network communications based on requests and responses, but could be any time-based network communications data with associated attributes. Each set of attributes, having a particular timestamp (such as time of capture), obtained from a store of directly from a network, is referred to as a unit of data, and could be, but is not limited to being, a network data packet.
The embodiments described above store the count data in Analysis Store 150 for each signature for each specified time sub-interval (smallest time resolution, such as 1 second). However, to efficiently and rapidly produce time series of much longer time periods according to the invention, an aggregator (not shown) is provided which automatically periodically aggregates the data into progressively coarser time intervals (for example 10, 600, 3600 and 86400 seconds) and also stores the resulting information as tables. These tables have the same format as Fig. 3, with one row per (aggregated) time interval per signature, but with the count field being the sum of the counts for that signature from multiple shorter time intervals (e.g. from *t0* - *t9*). When further analysis is performed, the optimal resolution required to present the frequency distribution for any requested time period can automatically be selected.
All of the features described above by reference to the Domain Name System (DNS) network communications protocol could equally be applied by a person skilled in the art, without departing from the scope of the invention, to alternative network communications protocols, such as Simple Network Management Protocol (SNMP, described in RFC 1441) and Remote Authentication Dial In User Service (RADIUS, described in RFC 2865).

It is possible to implement each of the various items in Figs. 1, 2 and 4 as dedicated hardwired electronic circuits; however the various items do not have to be separate from each other, and some or all could be integrated onto a single electronic chip. Furthermore, the items can be embodied as a combination of hardware and software, and the software can be executed by any suitable general-purpose microprocessor, such that in one embodiment the apparatus can be a conventional personal computer (PC) or server, such as a standard desktop or laptop computer with an attached monitor, with connection to the desired communications network. Alternatively, the apparatus can be a dedicated device.

The invention can also be embodied as a computer program stored on any suitable computer-readable storage medium, such as a solid-state computer memory, a hard drive, or a removable disc-shaped medium in which information is stored magnetically, optically or magneto-optically. The computer program comprises computer-executable code that when executed on a computer system causes the computer system to perform a method embodying the invention.

## Claims

1. A method of analysing network communications data, comprising units of data obtained from a communications network, wherein each unit of data comprises a plurality of attributes and is associated with a respective timestamp representing a time of capture by a packet capture device that has received copies of traffic from the communications network, each unit of data being stored as a record in a record store (40), the method comprising:
specifying a time interval, and for that time interval:
generating (120) a signature from each unit of network communications data whose timestamp is in that time interval;
counting the number of occurrences of each distinct signature; and
storing (130) a resulting table of counts corresponding to each signature, wherein:
the network communications data is DNS protocol data;
each signature is formed by combining multiple values of attributes of the unit of data into a single numerical value; and
the method further comprises aggregating the results in the table to create at least one further table in which the counts correspond to occurrences of each distinct signature over multiple consecutive time intervals.

2. A method according to claim 1, further comprising repeating the method for each time interval within an overall time period.

3. A method according to claim 1 or 2, further comprising decomposing each signature in the resulting table back into the original attributes of the network communications data represented by the respective signature.

4. A method according to any preceding claim, wherein the units of network communications data are retrieved from a store (40).

5. A method according to any preceding claim, further comprising using the resulting table for display of attributes of the network communications data as time series.

6. A method according to any preceding claim wherein said method is computer-implemented.

7. A computer program comprising computer-executable code that when executed on a computer system causes the computer system to perform a method according to any one of the preceding claims.

8. A computer program product, directly loadable into the internal memory of a digital computer, comprising software code portions for performing the method of any one of the preceding claims when said product is run on a computer.

9. An apparatus for analysing network communications data, comprising units of data obtained from a communications network, wherein each unit of data comprises a plurality of attributes and is associated with a respective timestamp representing a time of capture by a packet capture device that has received copies of traffic from the communications network, each unit of data being stored as a record in a record store (40), the apparatus being arranged to:
specify a time interval, and for that time interval:
generate (120) a signature from each unit of network communications data whose timestamp is in that time interval;
count the number of occurrences of each distinct signature; and
store (130) a resulting table of counts corresponding to each signature, wherein:
the network communications data is DNS protocol data;
each signature is formed by combining multiple values of attributes of the unit of data into a single numerical value; and
the apparatus is further arranged to aggregate the results in the table to create at least one further table in which the counts correspond to occurrences of each distinct signature over multiple consecutive time intervals.

## Patentansprüche

1. Verfahren zum Analysieren von Netzwerkkommunikationsdaten, umfassend Einheiten von Daten, die von einem Kommunikationsnetz erhalten werden, wobei jede Einheit von Daten eine Vielzahl von Attributen umfasst und einem entsprechenden Zeitstempel zugeordnet ist, der eine Zeit des Erfassens durch eine Paketerfassungsvorrichtung, die Kopien von Verkehr vom Kommunikationsnetz erhalten hat, darstellt, wobei jede Einheit von Daten als Datensatz in einem Datensatzspeicher (40) gespeichert ist, wobei das Verfahren Folgendes umfasst:
Festlegen eines Zeitintervalls und für dieses Intervall:
Erzeugen (120) einer Signatur von jeder Einheit von Netzwerkkommunikationsdaten, deren Zeitstempel in diesem Zeitintervall ist;
Zählen der Anzahl von Auftreten jeder einzelnen Signatur; und
Speichern (130) einer resultierenden Tabelle der Zählungen entsprechend jeder Signatur, wobei:
die Netzwerkkommunikationsdaten DNS-Protokolldaten sind;
jede Signatur durch Kombinieren mehrerer Werte von Attributen der Einheit von Daten in einen einzigen numerischen Wert gebildet wird; und
das Verfahren ferner das Aggregieren der Ergebnisse in der Tabelle umfasst, um mindestens eine weitere Tabelle, in der die Zählungen dem Auftreten jeder einzelnen Signatur über mehrere aufeinanderfolgende Zeitintervalle entsprechen, zu erstellen.

2. Verfahren nach Anspruch 1, ferner umfassend das Wiederholen des Verfahrens für jedes Zeitintervall innerhalb eines Gesamtzeitraums.

3. Verfahren nach Anspruch 1 oder 2, ferner umfassend das Zerlegen jeder Signatur in der resultierenden Tabelle zurück in die ursprünglichen Attribute von Netzwerkkommunikationsdaten, die von den entsprechenden Signaturen dargestellt werden.

4. Verfahren nach einem der vorstehenden Ansprüche, wobei die Einheiten von Netzwerkkommunikationsdaten von einem Speicher (40) abgerufen werden.

5. Verfahren nach einem der vorstehenden Ansprüche, ferner umfassend das Verwenden der resultierenden Tabelle zur Anzeige von Attributen von Netzwerkkommunikationsdaten als Zeitreihen.

6. Verfahren nach einem der vorstehenden Ansprüche, wobei das Verfahren computerimplementiert ist.

7. Computerprogramm, umfassend computerausführbaren Code, der, wenn auf einem Computersystem ausgeführt, das Computersystem dazu veranlasst, ein Verfahren nach einem der vorstehenden Ansprüche durchzuführen.

8. Computerprogrammprodukt, das direkt in den internen Speicher eines digitalen Computers ladbar ist, umfassend Softwarecodeabschnitte zum Durchführen des Verfahrens nach einem der vorstehenden Ansprüche, wenn das Produkt auf einem Computer läuft.

9. Vorrichtung zum Analysieren von Netzwerkkommunikationsdaten, umfassend Einheiten von Daten, die von einem Kommunikationsnetz erhalten werden, wobei jede Einheit von Daten eine Vielzahl von Attributen umfasst und einem entsprechenden Zeitstempel zugeordnet ist, der eine Zeit des Erfassens durch eine Paketerfassungsvorrichtung, die Kopien von Verkehr vom Kommunikationsnetz erhalten hat, darstellt, wobei jede Einheit von Daten als Datensatz in einem Datensatzspeicher (40) gespeichert ist, wobei die Vorrichtung angeordnet ist, um:
ein Zeitintervall festzulegen und für dieses Zeitintervall:
eine Signatur von jeder Einheit von Netzwerkkommunikationsdaten, deren Zeitstempel in diesem Zeitintervall ist, zu erzeugen (120);
die Anzahl von Auftreten jeder einzelnen Signatur zu zählen; und
eine resultierende Tabelle der Zählungen entsprechend jeder Signatur zu speichern (130), wobei:
die Netzwerkkommunikationsdaten DNS-Protokolldaten sind;
jede Signatur durch Kombinieren mehrerer Werte von Attributen der Einheit von Daten in einen einzigen numerischen Wert gebildet wird; und
die Vorrichtung ferner angeordnet ist, um die Ergebnisse in der Tabelle zu aggregieren, um mindestens eine weitere Tabelle, in der die Zählungen dem Auftreten jeder einzelnen Signatur über mehrere aufeinanderfolgende Zeitintervalle entsprechen, zu erstellen.

## Revendications

1. Procédé d'analyse de données de communication de réseau, comprenant des unités de données obtenues depuis un réseau de communication, chaque unité de données comprenant une pluralité d'attributs et étant associée à un horodatage respectif représentant un temps de capture par un dispositif de capture de paquets qui a reçu des copies de trafic depuis le réseau de communication, chaque unité de données étant stockée en tant qu'enregistrement dans un magasin d'enregistrements (40), le procédé comprenant :
la spécification d'un intervalle de temps, et pour cet intervalle de temps :
la génération (120) d'une signature depuis chaque unité de données de communication de réseau dont l'horodatage se situe dans cet intervalle de temps ;
le comptage du nombre d'occurrences de chaque signature distincte ; et
le stockage (130) d'une table de comptes résultante correspondant à chaque signature,
les données de communication de réseau étant des données de protocole DNS ;
chaque signature étant formée par la combinaison de multiples valeurs d'attributs de l'unité de données en une seule valeur numérique ; et
le procédé comprenant en outre l'agrégation des résultats dans la table pour créer au moins une autre table dans laquelle les comptes correspondent à des occurrences de chaque signature distincte sur de multiples intervalles de temps consécutifs.

2. Procédé selon la revendication 1, comprenant en outre la répétition du procédé pour chaque intervalle de temps dans un délai global.

3. Procédé selon la revendication 1 ou 2, comprenant en outre la décomposition de chaque signature dans la table résultante pour revenir aux attributs d'origine des données de communication de réseau représentés par la signature respective.

4. Procédé selon l'une quelconque des revendications précédentes, dans lequel les unités de données de communication de réseau sont extraites d'un magasin (40).

5. Procédé selon l'une quelconque des revendications précédentes, comprenant en outre l'utilisation de la table résultante pour l'affichage d'attributs des données de communication de réseau en tant que série temporelle.

6. Procédé selon l'une quelconque des revendications précédentes, dans lequel ledit procédé est informatisé.

7. Programme informatique comprenant un code exécutable par ordinateur qui, lorsqu'il est exécuté sur un système informatique, amène le système informatique à effectuer un procédé selon l'une quelconque des revendications précédentes.

8. Produit de programme informatique, directement chargeable dans la mémoire interne d'un ordinateur numérique, comprenant des parties de code logiciel destinées à effectuer le procédé selon l'une quelconque des revendications précédentes lorsque ledit produit est exécuté sur un ordinateur.

9. Appareil destiné à analyser des données de communication de réseau, comprenant des unités de données obtenues depuis un réseau de communication, dans lequel chaque unité de données comprend une pluralité d'attributs et est associée à un horodatage respectif représentant un temps de capture par un dispositif de capture de paquets qui a reçu des copies de trafic depuis le réseau de communication, chaque unité de données étant stockée en tant qu'enregistrement dans un magasin d'enregistrements (40), l'appareil étant conçu pour :
spécifier un intervalle de temps, et pour cet intervalle de temps :
générer (120) une signature depuis chaque unité de données de communication de réseau dont l'horodatage se situe dans cet intervalle de temps ;
compter le nombre d'occurrences de chaque signature distincte ; et
stocker (130) une table de comptes résultante correspondant à chaque signature,
les données de communication de réseau étant des données de protocole DNS ;
chaque signature étant formée par la combinaison de multiples valeurs d'attributs de l'unité de données en une seule valeur numérique ; et
l'appareil étant en outre conçu pour agréger les résultats dans la table pour créer au moins une autre table dans laquelle les comptes correspondent à des occurrences de chaque signature distincte sur de multiples intervalles de temps consécutifs.
